# FASCICULE DE BREVET EUROPEEN

(11) **EP 0 557 189 B1**
(45) Date de publication et mention de la délivrance du brevet: **07.01.1998**
(21) Numéro de dépôt: 93400396.3
(22) Date de dépôt: 17.02.1993
(51) Int. Cl.: G02B 6/44

(54) **Cassette de fibres optiques**
Kassette für optische Fibern
Cassette for optical fibers

(30) Priorité: 21.02.1992 FR 9202029
(43) Date de publication de la demande: 25.08.1993
(73) Titulaire: ALCATEL ALSTHOM COMPAGNIE GENERALE D'ELECTRICITE, 75008 Paris (FR)
(72) Inventeur: Vincent, Alain, F-77230 Juilly (FR); Milanowski, Michel, F-95620 Parmain (FR)
(74) Mandataire: Buffière, Michelle

(56) Documents cités:
- EP-A- 0 216 073
- EP-A- 0 368 445
- EP-A- 0 434 530
- PATENT ABSTRACTS OF JAPAN vol. 7, no. 121 (P-199)(1266) 25 Mai 1983 & JP-A-58 040 509 ( NIPPON DENSHIN DENWA KOSHA ) 9 Mars 1983

## Description

La présente invention se rapporte aux boîtiers de lovage et éventuellement de raccordement de fibres optiques, appelés de manière courante sous la dénomination cassette et ainsi désignés ci-après. Elle porte plus particulièrement sur la tenue des fibres optiques reçues dans une cassette.

Ces cassettes sont destinées à recevoir et protéger des surlongueurs de fibres optiques laissées en bout d'un ou de plusieurs câbles optiques et éventuellement à recevoir et protéger les raccordements des fibres de plusieurs câbles, entre eux ou à des jarretières optiques.

Le document FR-A- 2 601 785 décrit une telle cassette de fibres optiques. La cassette est affectée au lovage et à la protection des surlongueurs de fibres, à l'extrémité d'un câble. Elle comporte un fond dans lequel est défini un évidement entre un cylindre central sur le fond et un rebord périphérique. Deux canaux d'accès dans le rebord débouchent dans l'évidement. Les surlongueurs des fibres sont lovées autour du cylindre. Un anneau est de préférence rapporté autour du cylindre pour le lovage des fibres. Il est oté après lovage de toutes les fibres, pour leur donner une grande liberté, entre le cylindre et le rebord périphérique. Un couvercle ferme la cassette et recouvre les deux canaux d'accès.

Selon ce document, les fibres optiques extraites du câble sont protégées dans des tubes souples individuels, pour leur maintien en place dans les canaux d'accès de la cassette alors qu'elles sont lovées nues dans la cassette.

Ces canaux d'accès sont de section rectangulaire ou de section semi-cylindrique selon la structure plate ou la structure à jonc rainuré du câble d'où elles sont extraites. Les fibres tubées sont alignées côte à côte dans le canal de section rectangulaire et sont ainsi maintenues par le couvercle fixé sur la cassette. Elles sont mises en place dans les rainures d'un barillet rainuré en long, qui est monté dans le canal de section semi-circulaire, et sont retenues par immobilisation du barillet par le couvercle, ce dernier étant lui-même alors pourvu d'un canal semi-circulaire recevant le barillet.

Ces modes de maintien des fibres dans les canaux d'accès correspondent à deux modes de réalisation de cassettes spécifiques pour les deux types de câbles avec lesquels elles sont utilisées. Ils imposent que les fibres soient tubées alors qu'elles sont lovées nues. L'alignement côte à côte des fibres tubées dans le canal d'accès de section rectangulaire ne permet pas une réelle séparation et bonne tenue des fibres. La variante de réalisation, à barillet dans chaque canal d'accès de section semi-circulaire, est de mise en place et de maintien provisoire des fibres en place, tant que le couvercle n'est pas fixé sur la cassette, qui sont peu aisés à réaliser. En outre, cette répartition des fibres tubées sur la périphérie d'un barillet rend difficile le lovage lâche des fibres autour du cylindre, dans la hauteur de l'évidement autour de ce dernier.

On connaît en outre par le document EP-A 0216073 une cassette à deux canaux d'accès prévus entre les extrémités de l'un de ses deux grands bords et celles en regard de chacun de ses deux petits bords. Chaque canal d'accès reçoit un corps de serrage des fibres, à rainures parallèles, qui est monté en place avec deux directions possibles de ses rainures. A cet effet, le corps de serrage porte un tenon saillant sous son fond qui est reçu dans l'une des deux fentes perpendiculaires prévues sur la cassette.

Le document EP-A-0 434 530 divulgue quant à lui une autre cassette de lovage d'une fibre optique, qui est à double compartiment de part et d'autre d'un fond commun et comporte des rebords périphériques sur le fond, des accès à travers ces rebords, des plots de guidage de la fibre et des moyens intérieurs de lovage. Deux des accès sont prévus à deux des coins de la cassette. Chacun des plots est entre l'un de ces deux accès et les moyens intérieurs de lovage. Ces plots et les rebords périphériques délimitent l'espace de lovage autour de ces moyens de lovage. Chacun d'eux constitue aussi un obstacle en regard de l'accès concerné, pour le guidage de la fibre entre cet accès et l'espace de lovage.

La présente invention a pour but de réaliser une cassette dite standard, à canaux d'accès d'une part sélectionnables pour faciliter l'arrivée et le lovage des fibres dans la cassette et d'autre part adaptés pour ceux sélectionnés aux fibres nues ou tubées que chacun reçoit, pour assurer la séparation et une bonne tenue des fibres reçues.

Elle a pour objet une cassette de stockage de fibres optiques, comportant un fond, quatre rebords périphériques sur le fond et opposés deux à deux, des accès périphériques à au moins deux des coins entre les rebords pour le passage des fibres, des moyens sur le fond pour le lovage des fibres et/ou de maintien de raccords des fibres lovées, et des plots saillants sur le fond et centrés sensiblement chacun relativement à l'un desdits accès, de façon à délimiter chacun latéralement, entre une face latérale de ce plot et la partie terminale en vis-à-vis de l'un des rebords, deux canaux distincts par accès, les deux canaux du même accès ayant des directions axiales différentes l'une de l'autre pour la sélection de l'un ou l'autre de ces canaux en fonction de la direction des fibres arrivant depuis l'extérieur de la cassette à cet accès, et les canaux des différents accès étant sensiblement identiques ; ladite cassette comportant en outre un jeu d'au moins deux éléments à fentes de séparation et de guidage de fibres, chacun adapté pour pouvoir être monté amoviblement dans l'un desdits canaux, l'un desdits éléments étant d'un premier type, dont les fentes sont adaptées à des fibres nues, et l'autre desdits éléments étant d'un deuxième type, dont les fentes sont adaptées à des fibres protégées dans des tubes individuels, de façon à permettre le montage dans chaque canal sélectionné de l'un ou l'autre desdits éléments du premier et du second type, en fonction des fibres nues ou protégées destinées à arriver à cet accès et à être alors séparées les unes des autres et guidées selon la direction axiale de ce canal.

La cassette selon l'invention peut présenter en outre au moins l'une des caractéristiques additionnelles suivantes :
- elle présente deux échancrures, en vis-à-vis dans les parois latérales de chaque canal d'accès, dans lesquelles ledit élément est positionné;
- elle a ses deux premiers rebords droits et ses deux deuxièmes rebords arqués et présente, sur chaque accès double, la partie terminale du premier rebord concerné saillante sur celle du deuxième rebord concerné;
- elle présente quatre accès doubles, chacun à l'un de ses quatre coins;
- ledit plot est de section triangulaire;
- ledit plot présente une excroissance prolongeant vers l'extérieur de la cassette celle des faces latérales du plot située en regard de la partie terminale du deuxième rebord;
- elle est équipée sélectivement, dans l'un sélectionné des deux canaux d'accès appartenant lui-même à l'un également sélectionné des accès doubles, dudit élément choisi entre des éléments du premier type, affecté à la tenue de fibres nues et constitué par un pavé souple, et du deuxième type, affecté à la tenue de fibres optiques protégées dans un tube individuel de gainage et constitué par une pièce en U, ayant deux branches réunies par une base et formées chacune par une série de dents en vis-à-vis de l'une des branches à l'autre en définissant lesdites fentes dans la pièce;
- elle comporte en outre une patte rapportée et fixée sur le plot délimitant le canal d'accès équipé de l'élément dudit deuxième type, ladite patte s'étendant transversalement au canal d'accès sur ledit élément dudit deuxième type;
- ledit élément du premier type est en matériau mousse et celui dudit deuxième type est rigide.

Les caractéristiques et avantages de la présente invention ressortiront de la description faite ci-après d'un exemple de réalisation illustré dans les dessins ci-annexés.

Dans ces dessins :
- la figure 1 est une vue de dessus d'une cassette de fibres optiques équipée selon la présente invention,
- la figure 2 est une vue partielle en perspective éclatée montrant des modes d'équipement des canaux d'accès des fibres dans la cassette,
- les figures 3 et 4 sont deux vues de dessus et de côté de l'un des éléments d'équipement illustré dans la figure 2,
- la figure 5 est une vue partielle de dessus de la cassette, correspondant à la figure 2.

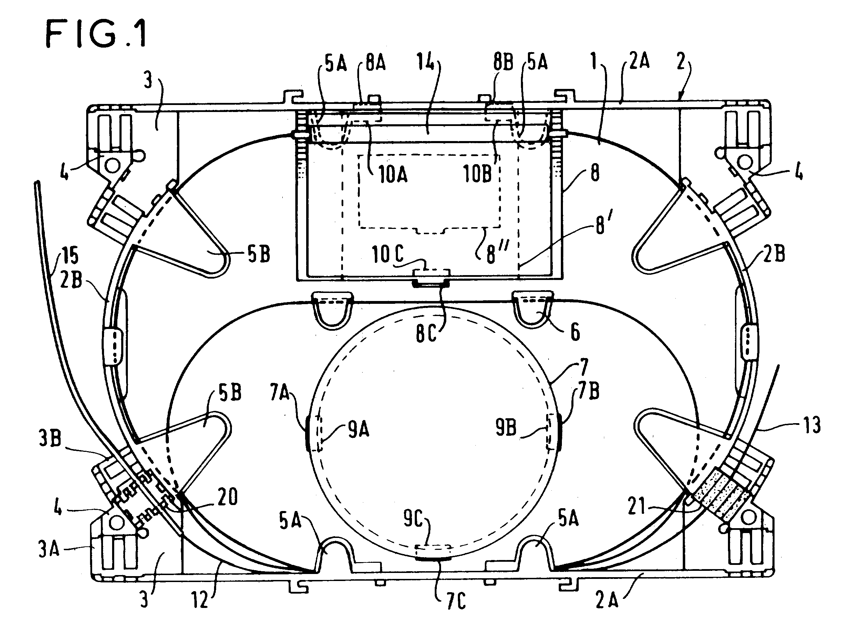

La cassette illustrée dans la figure 1 comporte un fond plat 1, sensiblement rectangulaire, dont les petits bords sont partiellement tronqués et arqués. Un rebord 2 discontinu entoure le fond. Il est formé par des rebords droits 2A le long des grands bords du fond et des rebords arqués 2B le long de ses petits bords. Ces rebords 2A et 2B définissent, entre leurs parties terminales droites et arquées, quatre accès 3 dits doubles sur le fond, pour les fibres reçues dans la cassette.

Des plots 4 sont saillants sur le fond sensiblement sur le bout extérieur des accès doubles 3. Chacun d'eux divise chaque accès double en deux canaux d'accès 3A, 3B distincts aboutissant en commun dans la cassette. Ces plots 4 sont sensiblement de même hauteur que les rebords 2A et 2B et de section triangulaire. Ils sont précisés ci-après.

Les rebords 2A présentent des pattes 5A et les rebords 2B des pattes 5B, qui s'étendent parallèlement au fond vers l'intérieur de la cassette. Deux autres pattes 6 sont saillantes sur le fond; dans sa partie centrale sensiblement. Elles sont légèrement décalées d'un côté de l'axe longitudinal médian et s'étendant vers l'autre côté. Elles sont symétriques par rapport à l'axe transversal médian. Ces pattes 5A, 5B et 6 servent au maintien sous elles des fibres lovées dans la cassette.

Le fond est en plastique. Il est obtenu par moulage. Les rebords, les pattes et les plots proviennent de moulage avec le fond. Les pattes notamment 5A et 6 peuvent être cassées.

Le fond 1 porte un cylindre 7 et un support 8 de raccords des fibres optiques, tous deux montés amovibles côte à côte sur la largeur de la partie médiane du fond. Le cylindre 7 et le support 8 présentent à cet effet un jeu de trois pattes d'encliquetage 7A, 7A, 7B, 7C ou 8A, 8B, 8C selon l'élément considéré. Le fond 1 présente quant à lui des jeux de trois ouvertures tels que 9A, 9B et 9C et 10A, 10B et 10C pour leur montage. Le support 8 de raccords peut être choisi parmi plusieurs types de supports différents comprenant, outre ce support 8, d'autres supports tels que 8'et 8'' ayant également un jeu de pattes d'encliquetage. Le cylindre 7 peut lui-même être remplacé par l'un des supports 8, 8' et 8'', les pattes 6 étant alors supprimées. Le jeu de pattes d'encliquetage du cylindre peut être constitué par les seules pattes opposées 7A et 7B.

Pour ce montage sélectif de l'un des supports de raccords et du cylindre, ou en variante de deux de ces supports de raccords, d'autres différents jeux de trois ouvertures, non représentés et auxquels peuvent appartenir l'une ou l'autre des ouvertures illustrées précédentes, sont prévus sur le fond rendu ainsi adaptable à la demande.

On a illustré deux fibres 12 et 13 reçues et lovées dans la cassette et raccordées par un raccord 14 retenu sur le support 8 choisi pour ce type de raccord. Bien entendu cette cassette peut reçevoir d'autres fibres traitées comme les fibres 12, 13.

La cassette est fermée par un couvercle non représenté, qui recouvre les rebords et les accès doubles 3.

Deux des accès doubles 3 des fibres dans la cassette sont choisis, parmi les quatre accès doubles prévus, en fonction de l'adaptation du fond par les éléments rapportés et encliquetés sur lui. L'un des canaux d'accès 3A, 3B de chacun d'eux est également sélectionné pour l'arrivée des fibres avec un rayon de courbure minimal requis dans la cassette.

Les deux canaux d'accès sélectionnés pour les fibres à raccorder sont équipés pour assurer la séparation en ligne, c'est-à-dire côte à côte, et la tenue des fibres à leur niveau.

L'élément monté dans chaque canal d'accès pour assurer cette fonction est lui-même adapté aux fibres reçues. Il est d'un premier type 20 pour des fibres se présentant tubées, comme montré pour la fibre 12 arrivant sous tube de protection 15 dans la cassette. Il est d'un deuxième type 21 pour les fibres se présentant nues, comme montré pour la fibre 13.

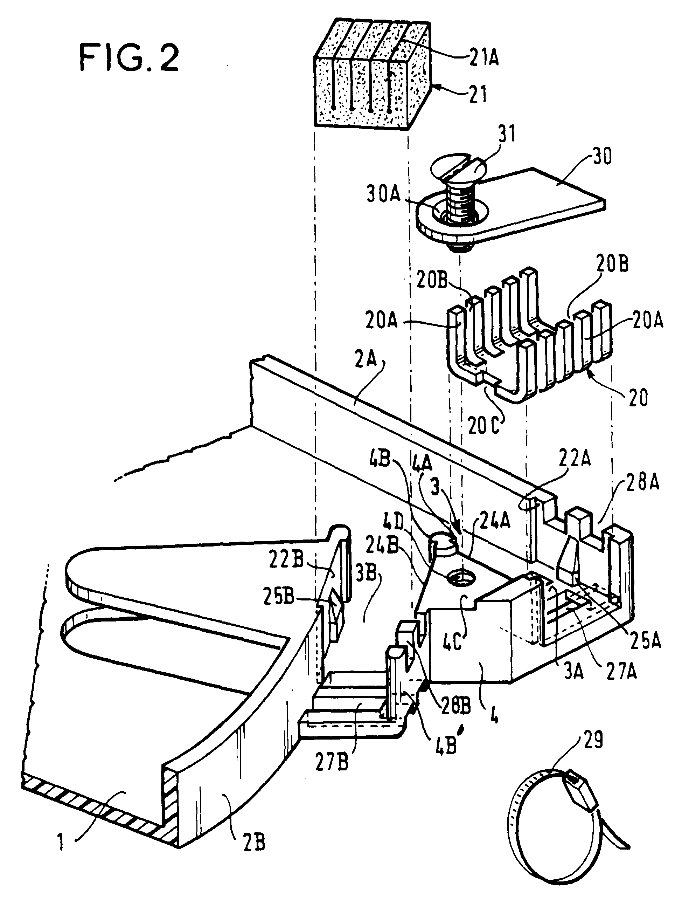

Les canaux d'accès 3A et 3B de l'un des accès doubles et l'élément de ce premier type 20 ou de ce deuxième type 21 que chacun des canaux peut recevoir sont précisés en regard des figures 2 à 5.

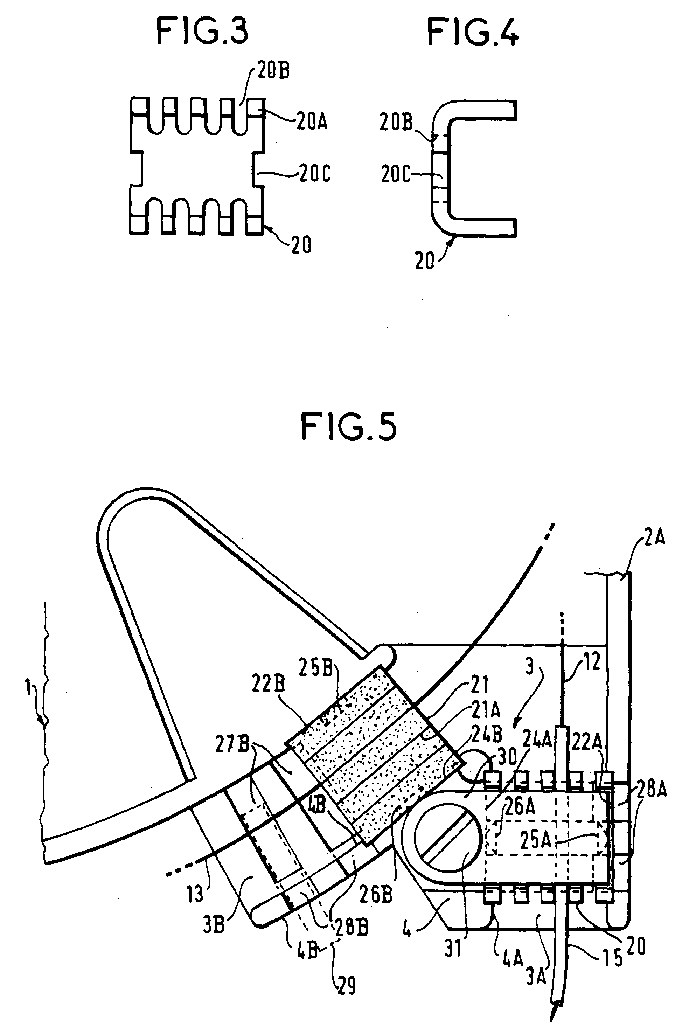

Dans les figures 2 et 5, pour des facilités de représentation et de compréhension, l'élément 20 a été orienté ou monté, selon la figure 2 ou 5, en regard ou dans le canal d'accès 3B et l'élément 21 en regard ou dans le canal d'accès 3A du même accès double 3. L'un ou l'autre des éléments 20 et 21 peut être monté indifféremment dans l'un ou l'autre de ces canaux d'accès 3A, 3B. Deux éléments 20 et/ou 21 sont en pratique montés dans deux canaux d'accès appartenant à deux accès doubles différents.

Les canaux d'accès 3A et 3B sont sensiblement identiques.

Ils sont de section transversales en U dont les deux parois latérales sont définies par la partie terminale du rebord 2A ou 2B correspondant et celle 4A ou 4B des faces latérales du plot 4 qui est situé en regard du rebord considéré. Chacune des parois latérales présente une échancrure, intérieure au canal d'accès et notée 22A, 22B sur les rebords 2A, 2B et 24A, 24B sur les faces 4A, 4B du plot 4. Les deux échancrures de chaque canal d'accès sont en vis-à-vis, sur sa hauteur. Deux bossages 25A et 26A ou 25B et 26B, centrés sur la partie inférieure des échancrures en vis-à-vis, sont saillants dans chaque canal d'accès. L'arête entre les faces 4A et 4B du plot est arrondie.

Le canal d'accès 3A présente deux lumières transversales 27A dans son fond, qui sont ouvertes sur la partie inférieure du rebord 2A, de part et d'autre du bossage 25A. Il leur correspond deux encoches 28A dans la partie supérieure de ce rebord. Sur le canal 3B, la face 4B concernée du plot 4 présente une excroissance 4B' s'étendant vers l'extérieur de la cassette. Deux lumières transversales 27B dans le fond de ce canal d'accès 3B débouchent sur la partie inférieure de cette excroissance. Deux encoches 28B leur correspondent sur la partie supérieure de cette excroissance.

Ces lumières et encoches servent à une tenue d'ensemble par un collier souple 29 des fibres reçues, en particulier quand celles-ci sont tubées.

Le plot 4 présente en outre une large échancrure 4C et un trou central 4D sur sa face supérieure. L'échancrure 4C débouche sur les deux faces latérales du plot limitant les canaux d'accès.

L'élément 21 de séparation et de tenue des fibres nues est un simple pavé souple. Il est par exemple en mousse relativement dense. Il est dimensionné pour venir s'encastrer entre les deux échancrures du canal d'accès qui le reçoit. Il est alors légèrement pressé par les deux bossages saillants dans ce canal d'accès et est en outre de préférence fixé par exemple par collage sur le fond de ce canal d'accès.

Cet élément 21 présente une série de fentes parallèles 21A, qui débouchent de part et d'autre sur l'extérieur et dans la cassette, quand l'élément est en place. Les fentes 21A s'étendent sur une partie importante de sa hauteur. Chacune d'elles reçoit une ou plusieurs fibres, telles que la fibre 13. L'élément 21 constitue ainsi un patin solidaire du canal d'accès, pour le guidage et la séparation unitaire en ligne des fibres, leur maintien et leur protection.

L'élément 20 de séparation et de tenue des fibres tubées est décrit en regard de ces mêmes figures 2 et 5 et/ou des figures 3 et 4. Il est constitué par une pièce en U, relativement rigide. Il est dimensionné pour venir s'encastrer entre les deux échancrures du canal d'accès qui le reçoit. Les deux branches de cet élément en U 20 s'étendent alors transversalement sur la largeur du canal d'accès.

Chacune des branches de l'élément 20 est fendue et définit une série de dents 20A et une série de fentes 20B entre ses dents. Les fentes 20B s'étendent légèrement sur la base de l'élément en U 20, les dents 20A étant arquées sur la transition entre la base et les branches. Les fentes sont en vis-à-vis d'une branche à l'autre. Chacune d'elles reçoit une fibre telle que 12 sous tube 15 ou plusieurs fibres tubées et assure le pincement du tube entre les deux dents qui l'encadre sur chaque branche.

Deux encoches 20C centrées sur les extrémités de la base de l'élément 20 s'encastrent sur les deux bossages saillants 25A dans le canal d'accès, pour assurer directement la tenue en place de l'élément 20.

Une patte 30 est de préférence associée à cet élément 20. Elle est de largeur correspondant sensiblement à l'écartement des branches de l'élément 20 mais de longueur supérieure à la longueur des branches pour être reçue et fixée sur le plot 4. L'une de ses extrémités s'encastre dans l'échancrure 4C prévue à cet effet sur la face supérieure du plot.

Une vis 31 insérée dans un trou 30A de cette extrémité et ancrée dans le trou 4D du plot assure le blocage en place de la patte.

Cette patte 30 et l'élément 20 sont métalliques ou en alliage léger ou en plastique de préférence plus dur que le matériau des tubes de gainage des fibres.

L'élément 20 et la patte associée 30 sont fonctionnellement analogues à l'élément 21, pour les fibres initialement tubées. On note en regard de la fibre tubée 12 que son tube de protection 15 s'étend à peine au-delà de l'élément 20 dans la cassette, la fibre 12 étant lovée nue dans la cassette.

Ces dispositions permettent d'équiper sélectivement les canaux d'accès, eux-mêmes sélectionnés, sans avoir à réaliser une cassette spécifique pour un mode d'utilisatin de la cassette et pour les fibres nues et/ou tubées que celle-ci reçoit.

## Revendications

1. Cassette de stockage de fibres optiques (13, 15), comportant un fond (1), quatre rebords périphériques (2A, 2B) sur le fond et opposés deux à deux, des accès périphériques (3) à au moins deux des coins entre les rebords pour le passage des fibres, des moyens sur le fond (7, 8) pour le lovage des fibres et/ou de maintien de raccords (14) des fibres lovées, et des plots (4) saillants sur le fond et centrés sensiblement chacun relativement à l'un desdits accès, de façon à délimiter chacun latéralement, entre une face latérale de ce plot et la partie terminale en vis-à-vis de l'un des rebords (2A, 2B), deux canaux distincts (3A, 3B) par accès (3), les deux canaux du même accès ayant des directions axiales différentes l'une de l'autre, pour la sélection de l'un ou l'autre de ces canaux en fonction de la direction des fibres arrivant depuis l'extérieur de la cassette à cet accès, et les canaux des différents accès étant sensiblement identiques; ladite cassette comportant en outre un jeu d'au moins deux éléments (20, 21) à fentes de séparation et de guidage de fibres, chacun adapté pour pouvoir être monté amoviblement dans l'un desdits canaux (3A, 3B), l'un (21) desdits éléments étant d'un premier type, dont les fentes (21A) sont adaptées à des fibres nues (13), et l'autre (20) desdits éléments étant d'un deuxième type, dont les fentes (20B) sont adaptées à des fibres protégées dans des tubes individuels (15), de façon à permettre le montage dans chaque canal selectionné de l'un (21) ou l'autre (20) desdits éléments (20, 21) du premier et du second type, en fonction des fibres nues ou protégées destinées à arriver à cet accès et à être alors séparées les unes des autres et guidées selon la direction axiale de ce canal.

2. Cassette selon la revendication 1, caractérisée en ce qu'elle présente deux échancrures (22A, 24A ; 22B, 24B), en vis-à-vis dans la face latérale du plot et la portion terminale du rebord délimitant entre elles l'un des canaux (3A, 3B), pour le montage amovible de l'un desdits éléments (20, 21) dans ce canal.

3. Cassette selon la revendication 2, caractérisée en ce qu'elle présente en outre des bossages (25A, 26A ; 25B, 26B) saillants sur les échancrures de chaque canal d'accès.

4. Cassette selon l'une des revendications 1 à 3, caractérisé en ce que lesdits rebords sont droits pour deux premiers d'entre eux (2A) et sont arqués pour les deux autres deuxièmes rebords (2B) et en ce que, au niveau de chaque accès, la partie terminale du premier rebord concerné (2A) est saillante extérieurement sur celle du deuxième rebord concerné (2B).

5. Cassette selon la revendication 4, caractérisée en ce qu'elle comporte quatre accès (3), chacun à l'un des quatre coins de la cassette.

6. Cassette selon l'une des revendications 4 et 5, caractérisée en ce que chaque plot (4) présente une excroissance (4B) prolongeant, vers l'extérieur de la cassette, celle des faces latérales du plot située en regard de la partie terminale du deuxième rebord (2B) sur le canal concerné (3B).

7. Cassette selon l'une des revendications 4 à 6, caractérisée en ce que chaque canal (3A, 3B) présente au moins une lumière transversale (27A, 27B) dans ledit fond selon la largeur du canal, recevant un collier (29) affecté à une tenue d'ensemble des fibres reçues dans le canal.

8. Cassette selon la revendication 7, caractérisée en ce qu'elle présente au moins une encoche (28A, 28B) prévue sur l'une des parois latérales de chaque canal et située dans un plan transversal au canal passant par chaque lumière dans le fond du canal.

9. Cassette selon l'une des revendications 4 à 8, caractérisée en ce que ledit élément (21) du premier type est constitué par un pavé souple, dont lesdites fentes (21A) reçoivent et retiennent lesdites fibres nues.

10. Cassette selon l'une des revendications 4 à 8, caractérisée en ce que ledit deuxième élément (20) du deuxième type, est constitué par une pièce en U ayant deux branches réunies par une base et formées chacune par une série de dents (20A), en vis à vis d'une branche à l'autre en définissant entre elles lesdites fentes (20B) recevant et retenant lesdites fibres protégées.

11. Cassette selon l'une des revendications 10 et 11, caractérisée en ce qu'elle comporte en outre une patte (30) associée à chaque deuxième élément (20) et rapportée et fixée sur le plot (4) délimitant le canal équipé de cet élément (20) dudit deuxième type, ladite patte s'étendant transversalement au canal sur ledit élément dudit deuxième type.

12. Cassette selon la revendication 11, caractérisée en ce que chaque plot présente sur sa face supérieure, à l'opposé du fond, une échancrure (4C) de positionnement de l'une des extrémités de ladite patte (30).

13. Cassette selon l'une des revendications 8 et 10, caractérisée en ce que l'élément dudit premier type (21) est en matériau mousse.

14. Cassette selon l'une des revendications 9 à 12, caractérisée en ce que l'élément dudit deuxième type (20) est relativement rigide.

15. Cassette selon la revendication 14, caractérisée en ce que le deuxième élément dudit deuxième type présente des encoches (20C) sur les bouts de ladite base.

16. Cassette selon une des revendications 14 et 15, caractérisée en ce que lesdites fentes se prolongent en regard les unes des autres sur ladite base.

## Patentansprüche

1. Kassette zur Lagerung von Lichtleitfasern (13, 15), welche einen Boden (1), vier periphere Ränder (2A, 2B) auf dem Boden, die sich jeweils paarweise gegenüberliegen, periphere Zugänge (3) an mindestens zwei der Ecken zwischen den Rändern zur Durchführung der Fasern, Mittel auf dem Boden (7, 8) zum Aufrollen der Fasern und/oder zum Halten der Verbindungsstücke (14) der aufgerollten Fasern und vier Blöcke (4) aufweist, die auf dem Boden vorspringen und jeweils in bezug auf einen der Zugänge im wesentlichen mittig angeordnet sind, so daß sie jeweils zwischen einer Seitenfläche dieses Blockes und dem gegenüberliegenden Endstück eines der Ränder (2A, 2B) zwei getrennte Kanäle (3A, 3B) pro Zugang (3) seitlich abgrenzen, wobei die beiden Kanäle desselben Zugangs voneinander verschiedene axiale Richtungen aufweisen, zur Wahl des einen oder anderen dieser Kanäle je nach der Richtung der von außerhalb der Kassette an diesem Zugang ankommenden Fasern, und wobei die Kanäle der verschiedenen Zugänge im wesentlichen identisch sind; wobei die genannte Kassette außerdem einen Satz von mindestens zwei Elementen (20, 21) mit Schlitzen zur Trennung und Führung von Fasern umfaßt, die jeweils so gestaltet sind, daß sie herausnehmbar in einem der Kanäle (3A, 3B) montiert werden können, wobei eines (21) der Elemente von einer ersten Art ist, bei der die Schlitze (21A) für nackte Fasern (13) ausgelegt sind, und das andere (20) der Elemente von einer zweiten Art ist, bei der die Schlitze (20B) für Fasern ausgelegt sind, die in einzelnen Schläuchen (15) geschützt sind, um die Montage des einen (21) oder anderen (20) dieser Elemente (20, 21) von der ersten und der zweiten Art in jedem gewählten Kanal je nach den nackten oder geschützten Fasern zu gestatten, die an diesem Zugang eintreten und dann voneinander getrennt und entlang der axialen Richtung dieses Kanals geführt werden sollen.

2. Kassette nach Anspruch 1, dadurch gekennzeichnet, daß sie in der Seitenwand des Blockes und dem Endstück des Randes, die zwischen sich einen der Kanäle (3A, 3B) abgrenzen, zwei gegenüberliegende Ausschnitte (22A, 24A; 22B, 24B) zur lösbaren Montage eines der Elemente (20, 21) in diesem Kanal aufweist.

3. Kassette nach Anspruch 2, dadurch gekennzeichnet, daß sie außerdem Vorsprünge (25A, 26A; 25B, 26B) auf den Ausschnitten jedes Zugangskanals ausweist.

4. Kassette nach einem der Ansprüche 1 bis 3, dadurch gekennzeichnet, daß die zwei ersten Ränder (2A) gerade sind und die zwei anderen, zweiten Ränder (2B) bogenförmig sind und daß in Höhe jedes Zugangs das Endstück des betreffenden ersten Randes (2A) über das des betreffenden zweiten Randes (2B) hinausragt.

5. Kassette nach Anspruch 4, dadurch gekennzeichnet, daß sie vier Zugänge (3) aufweist, die sich jeweils an einer der vier Ecken der Kassette befinden.

6. Kassette nach einem der Ansprüche 4 und 5, dadurch gekennzeichnet, daß jeder Block (4) einen Auswuchs (4B) aufweist, der diejenige Seitenwand des Blockes, die dem Endstück des zweiten Randes (2B) an dem betreffenden Kanal (3B) gegenüberliegt, zur Außenseite der Kassette hin fortsetzt.

7. Kassette nach einem der Ansprüche 4 bis 6, dadurch gekennzeichnet, daß jeder Kanal (3A, 3B) wenigstens ein quergerichtetes Schlitzloch (27A, 27B) in dem Boden entlang der Breite des Kanals aufweist, das eine Schelle (29) aufnimmt, die dafür bestimmt ist, die in dem Kanal aufgenommenen Fasern zusammenzuhalten.

8. Kassette nach Anspruch 7, dadurch gekennzeichnet, daß sie wenigstens eine Aussparung (28A, 28B) aufweist, die auf einer der Seitenwände jedes Kanals vorgesehen ist und sich in einer transversalen Ebene des Kanals befindet, die durch jedes Schlitzloch im Boden des Kanals verläuft.

9. Kassette nach einem der Ansprüche 4 bis 8, dadurch gekennzeichnet, daß das Element (21) von der ersten Art aus einem weichen Block besteht, dessen Schlitze (21A) die nackten Fasern aufnehmen und festhalten.

10. Kassette nach einem der Ansprüche 4 bis 8, dadurch gekennzeichnet, daß das zweite Element (20) von der zweiten Art aus einem U-förmigen Stück besteht, das zwei Schenkel aufweist, die durch eine Basis verbunden werden und jeweils von einer Reihe von Zähnen (20A) gebildet werden, die sich von einem Schenkel zum anderen jeweils gegenüberliegen, wobei sie zwischen sich die Schlitze (20B) definieren, welche die geschützten Fasern aufnehmen und festhalten.

11. Kassette nach einem der Ansprüche 10 und 11, dadurch gekennzeichnet, daß sie außerdem eine Lasche (30) aufweist, die mit jedem zweiten Element (20) assoziiert ist und an dem Block (4), der den mit diesem Element (20) dieser zweiten Art bestückten Kanal abgrenzt, angefügt und befestigt ist, wobei diese Lasche sich quer zum Kanal über das Element von der zweiten Art erstreckt.

12. Kassette nach Anspruch 11, dadurch gekennzeichnet, daß jeder Block auf seiner Oberseite, die dem Boden gegenüberliegt, einen Ausschnitt (4C) zur Anordnung eines der Enden der Lasche (30) aufweist.

13. Kassette nach einem der Ansprüche 8 und 10, dadurch gekennzeichnet, daß das Element von der ersten Art (21) aus Schaumstoff ist.

14. Kassette nach einem der Ansprüche 9 bis 12, dadurch gekennzeichnet, daß das Element von der zweiten Art (20) relativ starr ist.

15. Kassette nach Anspruch 14, dadurch gekennzeichnet, daß das zweite Element von der zweiten Art an den Enden der Basis Aussparungen (20C) aufweist.

16. Kassette nach einem der Ansprüche 14 und 15, dadurch gekennzeichnet, daß sich die Schlitze einander gegenüberliegend auf dieser Basis fortsetzen.

## Claims

1. A storage cassette for storing optical fibers (13, 15), said cassette including a bottom (1), four peripheral rim segments (2A, 2B) on the bottom and opposite each other in twos, peripheral accesses (3), through which the fibers can pass, at at least two of the corners between the rim segments, means (7, 8) on the bottom for coiling said fibers and/or holding connections (14) between coiled fibers, and blocks (4) projecting from the bottom and each substantially centered relative to one of said accesses, so as to laterally delimit each access between a side face of said block and the facing end portion of one of said rim segments (2A, 2B), two distinct channels (3A, 3B) per access (3), the two channels of the same access having different axial directions to each other in order to select one or other of the channels as a function of the direction of the fibers coming from the outside of said cassette to said access, and the channels of the different accesses being substantially identical; said cassette further including a set of at least two elements (20, 21) having slots for separating and guiding the fibers, each element designed to be removably mounted in one of said channels (3A, 3B), one (20) of said elements being of a second type having slots (20B) designed for protected fibers enclosed inside individual tubes (15), so as to allow one (21) or the other (20) of said elements (20, 21) of the first and second type to be mounted in each selected channel as a function of the bare or protected fibers expected to arrive at said access, and then be separated from one another and guided along the axial direction of said channel.

2. A cassette according to claim 1, characterized in that it has two facing recesses (22A, 24A; 22B, 24B) in the side face of the block and the end portion of the rim segment delimiting one of the channels (3A, 3B) therebetween for removably mounting one of said elements (20, 21) in said channel.

3. A cassette according to claim 2, characterized in that it further has projections (25A, 26A; 25B, 26B) projecting from the recesses in each access channel.

4. A cassette according to any one of claims 1 to 3, characterized in that the two first rim segments (2A) are straight and the two second rim segments (2A) are curved, and in that at each access, the end portion of the first rim segment in question (2A) projects outwardly relative to the end portion of the second rim segment in question (2B).

5. A cassette according to claim 4, characterized in that it includes four accesses (3) respectively disposed at the four corners of the cassette.

6. A cassette according to claim 4 or 5, characterized in that each block (4) has an extension (4B) outwardly extending that one of the side faces of the block which is situated facing the end portion of the second rim segment (2B) over the channel in question (3B).

7. A cassette according to any one of claims 4 to 6, characterized in that each channel (3A, 3B) has at least one transverse aperture (27A, 27B) in said bottom in the direction of the width of the channel, which aperture receives a collar (29) used for holding together the fibers received in the channel.

8. A cassette according to claim 7, characterized in that it has at least one notch (28A, 28B) provided in one of the sidewalls of each channel and situated in a transverse plane relative to the channel, which plane contains each aperture in the bottom of the channel.

9. A cassette according to any one of claims 4 to 8, characterized in that said element (21) of a first type is constituted by a flexible slab having slots (21A) receiving and retaining said bare fibers.

10. A cassette according to any one of claims 4 to 8, characterized in that said second element (20) of the second type is constituted by a channel-section part having two flanges interconnected by a web, each flange being formed by a series of teeth (20A), the teeth on one flange facing the teeth on the other flange, and the teeth delimiting said slots (20B) between one another, which slots are for receiving and retaining said protected fibers.

11. A cassette according to claim 10, characterized in that it further includes a tab (30) associated with each second element (20) and attached and fixed on the block (4) delimiting the access channel equipped with said element (20) of said second type, said tab extending transversely across the channel over said element of said second type.

12. A cassette according to claim 11, characterized in that each block has a recess (4C) in its top face opposite from the bottom for positioning one end of said tab (30).

13. A cassette according to claim 8 or 10, characterized in that the element of said first type (21) is made of a foam material.

14. A cassette according to any one of claims 9 to 12, characterized in that the element of said second type (20) is relatively rigid.

15. A cassette according to claim 14, characterized in that the second element of said second type has notches (20C) in the ends of said web.

16. A cassette according to claim 14 or 15, characterized in that said slots are extended facing one another into said web.
